# EUROPEAN PATENT SPECIFICATION

(11) **EP 1 352 540 B1**
(45) Date of publication and mention of the grant of the patent: **23.03.2005**
(21) Application number: 02702275.5
(22) Date of filing: 16.01.2002
(51) Int. Cl.: H04Q 7/38, H04L 12/56

(54) **METHOD AND RADIO COMMUNICATIONS SYSTEM FOR REPORTING STATUS INFORMATION BETWEEN A MOBILE STATION AND A RADIO ACCESS NETWORK**
VERFAHREN UND FUNKKOMMUNIKATIONSSYSTEM ZUR MELDUNG VON ZUSTANDSINFORMATIONEN ZWISCHEN EINEM FUNKGERÄT UND EINEM FUNKZUGRIFFSNETZ
PROCEDE ET SYSTEME DE COMMUNICATION RADIO PERMETTANT DE RAPPORTER DES INFORMATIONS D'ETAT ENTRE UNE STATION MOBILE ET UN RESEAU D'ACCES RADIO

(30) Priority: 16.01.2001 GB 0101115
(43) Date of publication of application: 15.10.2003
(73) Proprietor: SIEMENS AKTIENGESELLSCHAFT, 80333 München (DE)
(72) Inventor: Gessner, Christina, 81379 Munchen (DE); KROTH, Norbert, 14471 Potsdam (DE); Papoutsis, Georgios, 10587 Berlin (DE); RANDALL, David, Romsey Hampshire S051 5SZ (GB); SITTE, Armin, 10629 Berlin (DE); WEGNER, Frank, 13407 Berlin (DE)
(86) International application number: PCT/EP2002/000397
(87) International publication number: WO 2002/056627

(56) References cited:
- EP-A- 0 899 984
- "ETSI TS 125 331 V3.5.0; Universal Mobile Telecommunications System (UMTS); RRC Protocol Specification (3GPP TS 25.331 version 3.5.0 Release 1999)" 3GPP, December 2000 (2000-12), page 1,137-138,592-595 XP002201580 cited in the application

## Description

### Field of the invention

The present invention relates to radio communication networks and, in particular, relates to radio communication networks employing shared channels.

### Background to the invention

Radio systems deploying shared channels allow many users to share limited physical resources in order to transport data or control information in Uplink (UL) and Downlink (DL). In order to organise scheduling and allocate shared channel resources status information about the data transfer from the mobile equipment (ME) is needed. According to the received state reports from all involved mobile equipment the scheduler within the Radio Access Network (RAN) is then able to allocate resources for different users.

For an efficient usage of common resources the scheduler in the Radio Access Network needs to get status information from the mobile equipment at the end of the current planning interval in order to organise optimal allocation of shared channels resources for data transfer to/from different mobile equipment. For this purpose an optimised mobile equipment status reporting procedure is needed to execute efficient scheduling and allocation of shared channels in order to enable a fast and flexible access to common channels. However, the number of measurement events and measurement reports on/from the Mobile Equipment side should be as low as possible in order not to waste processing power and not to cause a lot of signalling traffic.

Allocation of physical resources for shared channels on Uplink (UL), executed by the Radio Access Network, is based on buffer measurements in the Mobile Equipment, which are reported to the Radio Access Network (MEASUREMENT REPORT message, see 3GPP TS 25.331 v3.5.0, chap. 8.4.2). These measurements in the mobile equipment, configured by the Radio Access Network, can be periodically triggered or be triggered by crossing certain threshold levels (see 3GPP TS 25.331 v3.5.0, chap. 14.4). However, the current reporting methods do not match well with the transient availability of transmission resources that occur with shared transport channels. Threshold based measurement events do not meet the need to gather the dynamics of the buffer state changes in the mobile equipment. Timer based (periodical) measurement events potentially provide more balanced reporting but can generate unnecessary signalling traffic when the buffers are empty. The problems of the current status reporting are, in part, caused by the independence of the measurement events with respect to the allocation cycle; the measurement report is not well synchronised with the shared channel allocation procedure.

Further, since measurement trigger events do not correspond well to shared channel allocation procedure, unnecessary signalling traffic on random access channel (RACH) can be caused.

The allocation of physical shared channel resources in the Downlink (DL) is based on buffer measurements and/or scheduling in the Radio Access Network. In order to perform allocation and scheduling the Radio Access Network can additionally request buffer status information from the Mobile Equipment to determine necessary retransmissions. The transmitted status (STATUS-PDU, see 3GPP TS 25.321, v3.6.0, chap. 9.2.1.6) can be used to determine which data has to be retransmitted. The trigger to transmit this status is set by the Radio Access Network and is transported to the mobile equipment together with "normal" data (see poll-bit in 3GPP TS 25.321, v3.6.0, chap. 9.2.1.4). The decision to set this poll-bit is normally independent from the channel allocation procedure (3GPP TS 25.321, v3.6.0, chap. 9.2.1).

Problems arising from the current status reporting system are:
- The Radio Access Network has to explicitly request state information (e.g. setting the poll-bit) for planning the following allocation cycles without generating unnecessary signalling traffic.
- The status information may not be transmitted at the end of the allocation cycle because of the independence of the poll-bit setting with respect to the allocation cycle, (and under different conditions, an additional bad parameter setting).
- The status request (poll-bit) can be lost by using the "normal" traffic channel. (e.g. bad power control)

EP-A-0 899 984 discloses a control unit and multiple units interconnected by a transmission line. The control unit emits signalisation cells addressed to individual units, in which it requests information relating to the status of the unit and estimated future needs and indicates time slots to be used by the unit for transmission of cells to the control unit. Based on this information received from the units, the control unit redistributes the available time slots to the units.

### Object of the present invention

The present invention seeks to provide an improved shared channel radio communications network.

### Statement of the invention

In accordance with the present invention, there is provided a method according to claim 1, a radio communications system according to claim 6 and a radio access network according to claim 7.

EP-A-0 899 984, does not disclose that information regarding the buffer status is requested. Therefore, the control unit does not have the latest information regarding the state of the buffer at allocation time, and it would be necessary to increase the signalling in order to acquire up-to-date status information.

### Brief description of the figures

Reference shall now be made to the following figures as shown in the drawing sheets, wherein
Figure 1 shows a cell in a radio network in accordance with the present invention; and

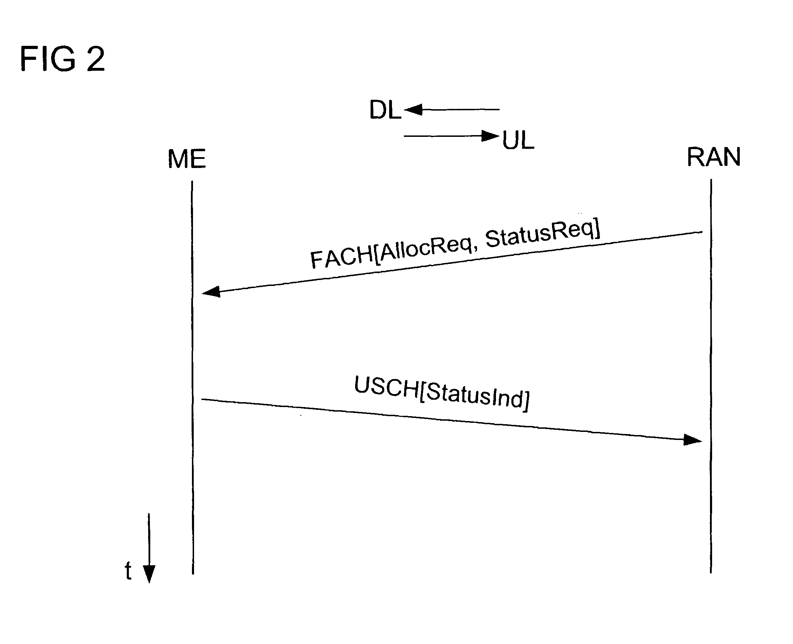

Figure 2 shows a time diagram for messages communicated between a mobile equipment and a radio access network access mode.

### Detailed description of preferred embodiment

There will now be a described by way of example, the best mode contemplated by the inventors for carrying out the invention. In the following description, numerous specific details are set out in order to provide a complete understanding of the present invention. It will be apparent however, to those skilled in the art that the present invention may be put into practice with variations of the specification.

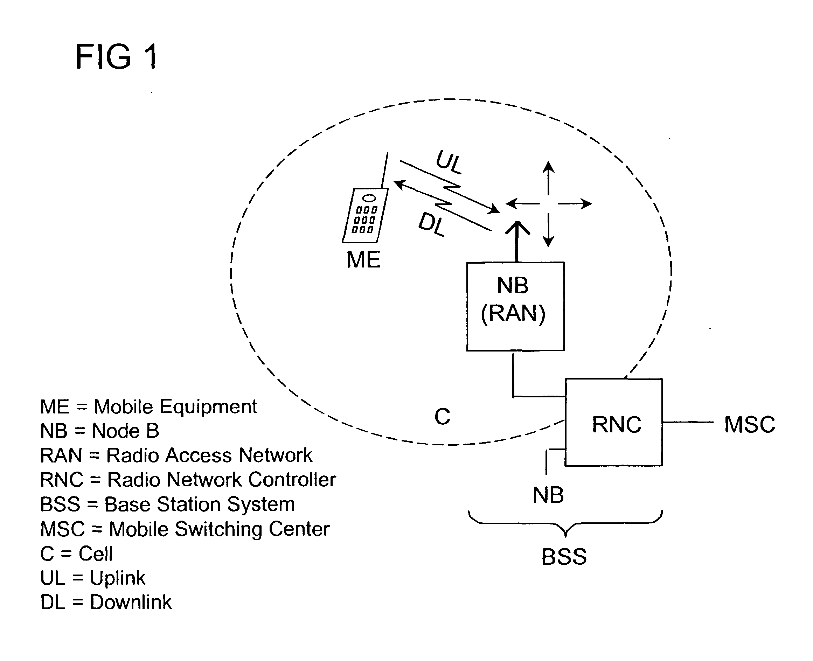

Referring now to figure 1, there is shown a radio access system comprising mobile equipment (ME) which communicate over an access network by uplink signals (UL) and down link signals (DL) with base stations (Node B; NB). The base stations communicate with a radio network controller (RNC) and comprise a base station system (BSS). The base stations also communicate with a mobile switching centre (MSC). The network requested Mobile Equipment buffer state reporting for shared channel resource allocation on Uplink (UL) and Downlink (DL) this concept allows the simultaneous transmission with an allocation request message (AllocReq), an additional message (StatusReq) in order to request information about the buffer status on the Mobile Equipment side (StatusInd) at a defined time (e.g. more than one round trip delay before the end of the current allocation cycle). This method can be used to send a StatusInd message to the Radio Access Network containing the latest possible status information from the Mobile Equipment at the end of the allocation cycle but still right in time for planning the next allocation interval. For the StatusInd an existing message can be used, whereas a new StatusReq message will be needed.

The transportation of StatusReq together with AllocReq is based on the assumption that AllocReq is normally transmitted on a safe channel (modulation, transmit power, e.g. UTRAN: FACH). Accordingly, for the message StatusInd a safe channel can be used as well (to enable maximum transmit power, high interleaving, e.g. UTRAN: USCH). Using such channels increase the probability that both messages (StatusReq and StatusInd) will be delivered.

This scheme can thus provide an additional method to request a "normal" status report. It is then possible to request a status report at a defined moment, independent to other existing rules.

By signalling the StatusReq with the AllocReq message it is possible to transport the request on a safer way (combination of allocation and request message; if the allocation is received on Mobile Equipment side, the request is received as well) and by using a safe channel for the measurement report (e.g. USCH) the whole allocation procedure becomes more robust and reliable. Furthermore, by applying this method, the Radio Access Network gets more precise information about the amount of data in the Mobile Equipment buffer for all involved users in order to organise efficient scheduling and to use shared physical resources in an optimised manner.
Subsequently, two scenarios for shared allocation within UTRAN TDD (Time Division Duplex) deploying this method will be described:
Network requested measurement reporting for shared channel resource allocation on Uplink (UL).

Additional to a timer or threshold based measurement reporting method, the UTRAN can request a buffer state measurement report from the Mobile Equipment when allocating physical resources, using the PhyShChAllocation message. Uplink (UP) on reception of this message, the Mobile Equipment responds with a state report (MEASUREMENT REPORT message) at a determined time (e.g. more than one round trip delay before the allocation cycle ends). The combination of threshold trigger (e.g. upward crossing of zero buffer state) with network requested measurement is seen as an efficient reporting solution. Further, signalling traffic (on RACH) can be reduced, because the measurement reports can be send on USCH only once within an allocation cycle.

Network requested measurement reporting for shared channel resource allocation on Downlink (DL):
Additional to the provision of poll-bit settings, timer or threshold based measurement reporting, the UTRAN can request a (buffer) status measurement report from the Mobile Equipment already when allocating physical resources, using the PhyShChAllocation message. Uplink (UP) on receipt of this message, the Mobile Equipment responds with a status report (using STATUS PDU) at a determined time (e.g. more than one round trip delay before the allocation cycle ends).

Additionally, it is possible to allocate a save Uplink (UL) resource for the transportation of the status (e.g. USCH).

The following advantages arise from the invention:
By giving the Radio Access Network an opportunity to request Mobile Equipment buffer state information at allocation time, the Mobile Equipment can respond with the latest measurement report at the right time, which is transmitted more than one round trip delay before the allocation cycle ends. Furthermore signalling traffic on random access channel (RACH) can be reduced by the use of USCH for measurement reporting.

Using safe channels in Downlink (DL) and Uplink (UL) to transmit status re and to the Mobile Equipment and status reports to the Radio Access Network in order to obtain a robust and reliable allocation procedure.

The invention describes a method which enables the Radio Access Network to request status (measurement) reports from the Mobile Equipment in order to perform scheduling and allocation of shared channels in a very efficient manner, without causing much signalling traffic. For this reason existing reporting methods can be combined with an additional measurement requested by the Radio Access Network. For this purpose the status request message (StatusReq) can be sent together with the allocation request message (AllocReq) the allocation request message already being present at the beginning of the allocation cycle. The status report (StatusInd) can then be transmitted at the end of the allocation cycle, ideally via a safe channel (e.g. USCH). Thus the allocation procedure can become very robust and reliable.

## Claims

1. A method for reporting status information between a mobile equipment (ME) and an access network (RAN) of a radio communications system, wherein
in an allocation cycle, the access network (RAN) sends an allocation message (AllocReq) for allocating resources of a shared channel together with an additional message (StatusReq) for requesting information about a buffer status of the mobile equipment (ME),
the mobile equipment (ME) sends a buffer status message (StatusInd) to the access network (RAN), and
the access network (RAN) takes the buffer status message (StatusInd) into account for allocating resources in a subsequent allocation cycle.

2. A method according to claim 1, wherein
the buffer status is requested at a defined time.

3. A method according to claim 2, wherein
the defined time is more than one round trip delay before the end of a current resource allocation cycle within the access network (RAN).

4. A method according to one of the preceeding claims, wherein
the allocation message (AllocReq) is transmitted on a FACH-channel, and the buffer status message (StatusInd) on an USCH-channel of an UTRAN radio access network.

5. A method according to one of the preceeding claims, wherein
the access network (RAN) requests a buffer state measurement report from the mobile equipment (ME) when allocating physical resources, and the mobile equipment (ME) responds with a state report at a determined time.

6. A radio communications system comprising an access network (RAN) operable to communicate with a mobile equipment (ME), and a mobile equipment (ME),
wherein the system is configured such that the access network (RAN) is operable to transmit, in an allocation cycle, to a mobile equipment (ME) an allocation message (AllocReq) for allocating resources of a shared channel together with an additional message (StatusReq) whereby to request information about the buffer status of the mobile equipment (ME),
wherein the mobile equipment (ME) is operable to transmit a buffer status message (StatusInd) to the access network, and
wherein the access network (RAN) is operable to take into account the buffer status message (StatusInd) for the allocation of resources in a subsequent allocation cycle

7. A radio access network, in a radio communications system,
wherein the radio access network is operable to transmit, in an allocation cycle, to a mobile equipment (ME) an allocation message (AllocReq) for allocating resources of a shared channel together with an additional message (StatusReq) whereby to request information about the buffer status, and
wherein the radio access network is operable to take into account the buffer status message (StatusInd) received from the mobile equipment (ME) for the allocation of resources in a subsequent allocation cycle.

## Patentansprüche

1. Verfahren zur Übermittlung von Zustandsinformationen zwischen einem Mobilfunkendgerät (ME) und einem Zugangsnetz (RAN) eines Funkkommunikationssystems, wobei
in einem Zuweisungszyklus das Zugangsnetz (RAN) eine Zuweisungs-Nachricht (AllocReq) zur Zuweisung von Ressourcen eines Shared Channels zusammen mit einer zusätzlichen Nachricht (StatusReq) zur Anforderung von Informationen über einen Pufferzustand des Mobilfunkendgeräts (ME) sendet,
das Mobilfunkendgerät (ME) eine Pufferzustands-Nachricht (StatusInd) an das Zugangsnetz (RAN) sendet, und
das Zugangsnetz (RAN) die Pufferzustands-Nachricht (StatusInd) für die Zuweisung von Ressourcen in einem nachfolgenden Zuweisungszyklus berücksichtigt.

2. Verfahren nach Anspruch 1, wobei
der Pufferzustand zu einem festgelegten Zeitpunkt angefordert wird.

3. Verfahren nach Anspruch 2, wobei
der festgelegte Zeitpunkt ein Zeitpunkt mehr als eine Umlaufzeit vor dem Ende des aktuellen Ressourcenzuweisungszyklus im Zugangsnetz (RAN) ist.

4. Verfahren nach einem der vorhergehenden Ansprüche, wobei
die Zuweisungs-Nachricht (AllocReq) auf einem FACH-Kanal und die Pufferzustands-Nachricht (StatusInd) auf einem USCH-Kanal eines UTRAN Funkzugangsnetzes übertragen wird.

5. Verfahren nach einem der vorhergehenden Ansprüche, wobei
das Zugangsnetz (RAN) vom Mobilfunkendgerät (ME) einen Pufferzustands-Messbericht anfordert, wenn es physikalische Ressourcen zuweist, und das Mobilfunkendgerät (ME) mit einem Zustandsbericht zu einem festgelegten Zeitpunkt antwortet.

6. Funkkommunikationssystem, welches ein Zugangsnetz (RAN), das in der Lage ist, mit einem Mobilfunkendgerät (ME) zu kommunizieren, und ein Mobilfunkendgerät (ME) umfasst,
wobei das System so gestaltet ist, dass das Zugangsnetz (RAN) in einem Zuweisungszyklus an ein Mobilfunkendgerät (ME) eine Zuweisungs-Nachricht (AllocReq) zur Zuweisung von Ressourcen eines Shared Channels zusammen mit einer zusätzlichen Nachricht (StatusReq) überträgt, um dadurch Informationen über den Pufferzustand des Mobilfunkendgeräts (ME) anzufordern,
wobei das Mobilfunkendgerät (ME) eine Pufferzustands-Nachricht (StatusInd) an das Zugangsnetz sendet, und wobei das Zugangsnetz (RAN) die Pufferzustands-Nachricht (StatusInd) für die Zuweisung von Ressourcen in einem nachfolgenden Zuweisungszyklus berücksichtigt.

7. Funkzugangsnetz in einem Funkkommunikationssystem, wobei das Funkzugangsnetz in einem Zuweisungszyklus an ein Mobilfunkendgerät (ME) eine Zuweisungs-Nachricht (AllocReq) zur Zuweisung von Ressourcen eines Shared Channels zusammen mit einer zusätzlichen Nachricht (StatusReq) überträgt, um dadurch Informationen über den Pufferzustand anzufordern, und wobei das Funkzugangsnetz die vom Mobilfunkendgerät (ME) empfangene Pufferzustands-Nachricht (StatusInd) für die Zuweisung von Ressourcen in einem nachfolgenden Zuweisungszyklus berücksichtigt.

## Revendications

1. Procédé d'établissement de rapports d'informations d'état entre un équipement mobile (ME) et un réseau d'accès (RAN) d'un système de radiocommunications, dans lequel
dans un cycle d'attribution, le réseau d'accès (RAN) envoie un message d'attribution (AllocReq) pour attribuer les ressources d'un canal partagé ensemble avec un message supplémentaire (StatusReq) pour demander des informations concernant un état de tampon de l'équipement mobile (ME),
l'équipement mobile (ME) envoie un message d'état de tampon (StatusInd) au réseau d'accès (RAN), et
le réseau d'accès (RAN) prend le message d'état de tampon (StatusInd) en compte pour attribuer les ressources dans un cycle d'attribution suivant.

2. Procédé selon la revendication 1, dans lequel
l'état de tampon est demandé à un instant défini.

3. Procédé selon la revendication 2, dans lequel
l'instant défini est plusieurs temps de transmission aller-retour avant la fin d'un cycle d'attribution de ressource actuel à l'intérieur du réseau d'accès (RAN).

4. Procédé selon l'une quelconque des revendications précédentes, dans lequel
le message d'attribution (AllocReq) est transmis sur un canal FACH, et le message d'état de tampon (StatusInd) sur un canal USCH d'un réseau d'accès radio UTRAN.

5. Procédé selon l'une quelconque des revendications précédentes, dans lequel
le réseau d'accès (RAN) demande un rapport de mesure d'état de tampon à l'équipement mobile (ME) lors de l'attribution des ressources physiques, et
l'équipement mobile (ME) répond avec un rapport d'état à un instant déterminé.

6. Système de radiocommunications comprenant un réseau d'accès (RAN) pouvant opérer pour communiquer avec un équipement mobile (ME), et un équipement mobile (ME),
dans lequel le système est configuré de sorte que le réseau d'accès (RAN) peut opérer pour transmettre à un équipement mobile (ME) , dans un cycle d'attribution, un message d'attribution (AllocReq) pour attribuer les ressources d'un canal partagé ensemble avec un message supplémentaire (StatusReq), afin de demander ainsi des informations concernant l'état de tampon de l'équipement mobile (ME),
dans lequel l'équipement mobile (ME) peut opérer pour transmettre un message d'état de tampon (StatusInd) au réseau d'accès, et dans lequel le réseau d'accès (RAN) peut opérer pour prendre en compte le message d'état de tampon (StatusInd) pour l'attribution des ressources dans un cycle d'attribution suivant.

7. Réseau d'accès radio, dans un système de radiocommunications, dans lequel le réseau d'accès radio peut opérer pour transmettre à un équipement mobile (ME), dans un cycle d'attribution, un message d'attribution (AllocReq) pour attribuer les ressources d'un canal partagé ensemble avec un message supplémentaire (StatusReq), afin de demander ainsi des informations concernant l'état de tampon, et dans lequel le réseau d'accès radio peut opérer pour prendre en compte le message d'état de tampon (Statuslnd) reçu de l'équipement mobile (ME) pour l'attribution des ressources dans un cycle d'attribution suivant.
